(19) **Europäisches Patentamt**
**European Patent Office**
**Office européen des brevets**

(11) **EP 4 571 135 A1**

(12) **EUROPÄISCHE PATENTANMELDUNG**

(43) Veröffentlichungstag:
**18.06.2025  Patentblatt 2025/25**

(21) Anmeldenummer: **24192888.6**

(22) Anmeldetag: **05.08.2024**

(51) Internationale Patentklassifikation (IPC):
*F16C 13/02* *(2006.01)*     *F16C 17/02* *(2006.01)*
*F16C 35/02* *(2006.01)*     *B21B 31/07* *(2006.01)*

(52) Gemeinsame Patentklassifikation (CPC):
**B21B 31/074; F16C 13/02; F16C 17/02;**
**F16C 35/02;** F16C 2226/16; F16C 2240/70;
F16C 2322/12

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität:  **15.12.2023  DE 202023107432 U**

(71) Anmelder: **Primetals Technologies USA LLC**
**Alpharetta, GA 30005 (US)**

(72) Erfinder:
• **Osgood, Peter**
  **Westborough, 01581 (US)**
• **Wojtkowski, Thomas**
  **Sutton, 01590 (US)**

(74) Vertreter: **Metals@Linz**
**Primetals Technologies Austria GmbH**
**Intellectual Property Upstream IP UP**
**Turmstraße 44**
**4031 Linz (AT)**

(54) **HÜLSE ALS TEIL EINES ÖLFILMLAGERS FÜR EINE WALZWERKWALZE, ÖLFILMLAGER UND WALZGERÜST**

(57)    Die Erfindung betrifft eine Hülse als Teil eines Ölfilmlagers für eine Walzwerkwalze, ein Ölfilmlager mit einer derartigen Hülse und ein Walzgerüst mit einem derartigen Ölfilmlager. Die Hülse (10) ist zur Aufnahme eines Walzenzapfens (16) der Walzwerkwalze bestimmt und zur drehbaren Lagerung in einer Lagerbuchse (18) ausgebildet. Die Lagerbuchse (18) ist in einem Lagergehäuse (20) eines Walzgerüsts angeordnet ist, wobei eine Außenseite (23) der Hülse zumindest abschnittsweise zylindrisch ausgebildet ist mit einem Außendurchmesser D und einer Länge L des zylindrischen Abschnitts,
wobei eine Innenseite der Hülse zumindest abschnittsweise konisch ausgebildet ist mit einem minimalen Innendurchmesser d des konischen Abschnitts (21). Für den minimalen Innendurchmesser d gilt:

$$D \cdot (c \cdot \ln(D) + b_{min}) \leq d \leq D \cdot (c \cdot \ln(D) + b_{max})$$

wobei D der Außendurchmesser in der Einheit Millimeter ist,
wobei c und $b_{min}$ und $b_{max}$ folgendermaßen definiert sind:
bei L:D ≤ 0,78 ist c=0,0305, $b_{min}$=0,5578, $b_{max}$=0,687
bei 0,78 < L:D < 0,88 ist c=0,0302, $b_{min}$=0,544, $b_{max}$=0,6706
bei L:D ≥ 0,88 ist c=0,0301, $b_{min}$=0,5278, $b_{max}$=0,655.

EP 4 571 135 A1

FIG 1

**Beschreibung**

Die Erfindung betrifft eine Hülse als Teil eines Ölfilmlagers für eine Walzwerkwalze, ein Ölfilmlager mit einer derartigen Hülse und ein Walzgerüst mit einem derartigen Ölfilmlager.

Eine derartige Hülse ist dazu bestimmt, in axialer Richtung einen Walzenzapfen der Walzwerkwalze aufnehmen. Das Ölfilmlager, dessen Teil die Hülse ist, umfasst ferner eine Lagerbuchse, die die Hülse umgibt. Die Lagerbuchse ist in einem Lagergehäuse angeordnet, das wiederum Teil eines Walzgerüsts ist. Die Hülse ist zur drehbaren Lagerung in einer Lagerbuchse ausgebildet, so dass auch der Walzenzapfen über die Lagerbuchse drehbar gelagert ist. Hierzu wird im Betrieb zumindest in der Belastungszone zwischen der Hülse und der Lagerbuchse ein Ölfilm aufrechterhalten.

Eine Außenseite der Hülse ist zumindest abschnittsweise zylindrisch ausgebildet. Eine Innenseite der Hülse ist zumindest abschnittsweise konisch ausgebildet, und zwar insbesondere im Bereich des zylindrischen Abschnitts der Außenseite, wobei sich der konische Verlauf entlang einer Hülsenlängsachse erstreckt. Mit anderen Worten: Die Hülse verjüngt sich in ihrem Inneren zumindest abschnittsweise in der vorgesehenen Einschubrichtung eines Walzzapfens. Die Hülse ist somit zur Aufnahme eines in korrespondierender Weise zumindest abschnittsweise konisch geformten Walzzapfens ausgebildet.

Derartige Hülsen sind aus US 4 093 321, US 4 384 748, US 4 286 830, US 4 351 576 und US 6 468 194 B2 bekannt.

In den letzten Jahrzehnten wurde die Ausbildung der Hülse Schritt für Schritt verbessert. Zur Erhöhung der Genauigkeit des Walzvorgangs im Hinblick auf die gleichmäßige Dicke der hergestellten Bleche wurde die Pass- und Fixiervorrichtung, insbesondere umfassend Keilnuten und Federkeile, zwischen Walzenzapfen und Hülse aus dem konischen Abschnitt der Innenseite der Hülse entfernt. Zur Erhöhung der Tragfähigkeit wurden in US 6 468 194 B2 die Geometrie der Hülse diskutiert und im Hinblick auf eine kontrollierte Verformung der Hülse bei Belastung spezielle Geometrien der Hülse vorgeschlagen. Dabei wurde insbesondere die Relevanz der Dicke der Hülsenwandung für eine kontrollierte Verformung der Hülse erörtert.

Der Erfindung liegt die Aufgabe zugrunde, eine Geometrie der Hülse vorzuschlagen, durch die sich eine kontrollierte Verformung der Hülse und damit eine hohe Genauigkeit des Walzvorgangs erreichen lässt. Ferner sollen ein Ölfilmlager und ein Walzgerüst mit einer derartigen Hülse angegeben werden.

Diese Aufgabe wird hinsichtlich der Hülse durch die Merkmale der Hülse nach Anspruch 1 oder nach Anspruch 2 und hinsichtlich des Ölfilmlagers durch die Merkmale des Ölfilmlagers nach Anspruch 4 und hinsichtlich des Walzgerüsts durch die Merkmale des Walzgerüsts nach Anspruch 5 gelöst. Ausgestaltungen und Weiterbildungen sind in den jeweiligen abhängigen Ansprüchen angegeben.

Die erfindungsgemäße Hülse ist Teil eines Ölfilmlagers für eine Walzwerkwalze. Die Hülse ist zur Aufnahme eines Walzenzapfens der Walzwerkwalze bestimmt und zur drehbaren Lagerung in einer Lagerbuchse ausgebildet. Die Lagerbuchse ist somit ebenfalls Teil des Ölfilmlagers, wie eingangs erläutert. Die Lagerbuchse ist in einem Lagergehäuse eines Walzgerüsts angeordnet.

Eine Außenseite der erfindungsgemäßen Hülse ist zumindest abschnittsweise zylindrisch ausgebildet mit einem Außendurchmesser D und einer Länge L des zylindrischen Abschnitts.

Eine Innenseite der Hülse ist zumindest abschnittsweise konisch ausgebildet mit einem minimalen Innendurchmesser d des konischen Abschnitts. Insbesondere ist der konische Abschnitt der Innenseite in Richtung einer Längsachse der Hülse gesehen auf Höhe des zylindrischen Abschnitts der Außenseite angeordnet, so dass der konische Abschnitt dem zylindrischen Abschnitt gegenüberliegt. Der zylindrische Abschnitt kann sich hierbei über den konischen Abschnitt hinaus erstrecken.

Die Formulierung "zumindest abschnittsweise" umfasst die Alternativen "vollständig" und "abschnittsweise", also "teilweise". In der Alternative "vollständig" bildet somit die gesamte Innenseite der Hülse den konischen Abschnitt, in der Alternative "abschnittsweise" weist die Innenseite neben dem konischen Abschnitt einen oder mehrere weitere Abschnitte, beispielsweise einen zylindrischen Abschnitt, auf. Gleiches gilt für die Außenseite der Hülse.

Gemäß einer ersten Ausgestaltung der Erfindung ist die erfindungsgemäße Hülse dadurch gekennzeichnet, dass für den minimalen Innendurchmesser d gilt:

$$D \cdot (c \cdot \ln(D) + b_{min}) \leq d \leq D \cdot (c \cdot \ln(D) + b_{max})$$

In Worten: D "mal" in Klammern (c "mal" der "natürliche Logarithmus von D" plus $b_{min}$) ist "kleiner gleich" d und d ist ferner "kleiner gleich" D "mal" in Klammern (c "mal" der "natürliche Logarithmus von D" plus $b_{max}$).

D ist hierbei der Außendurchmesser in der Einheit Millimeter.

c und $b_{min}$ und $b_{max}$ sind hierbei folgendermaßen in Abhängigkeit vom Verhältnis L:D (in Worten: "L geteilt durch D") definiert:

bei L:D $\leq$ 0,78 ist c=0,0305 und $b_{min}$=0,5578 und $b_{max}$=0,687

bei $0{,}78 < L{:}D < 0{,}88$ ist $c=0{,}0302$ und $b_{min}=0{,}544$ und $b_{max}=0{,}6706$

bei $L{:}D \geq 0{,}88$ ist $c=0{,}0301$ und $b_{min}=0{,}5278$ und $b_{max}=0{,}655$

Die erste Ausgestaltung der Erfindung gibt somit an, welche minimalen Innendurchmesser d der Hülse bei einem bestimmten Außendurchmesser D und einer bestimmten Länge L des zylindrischen Abschnitts der Außenseite der Hülse vorgesehen werden müssen, wobei sich aus $b_{min}$ und $b_{max}$ ein Intervall ergibt, aus dem der Innendurchmesser d zur Ausbildung einer bestimmten Geometrie ausgewählt werden kann.

Gemäß einer zweiten Ausgestaltung der Erfindung ist die erfindungsgemäße Hülse dadurch gekennzeichnet, dass für den minimalen Innendurchmesser d gilt:

$$d = D \cdot (c \cdot \ln(D) + b)$$

In Worten: d "ist gleich" D "mal" in Klammern (c "mal" der "natürliche Logarithmus von D" plus b).

D ist wiederum der Außendurchmesser in der Einheit Millimeter.

c und b sind hierbei folgendermaßen in Abhängigkeit vom Verhältnis L:D (in Worten: "L geteilt durch D") definiert:

bei $L{:}D \leq 0{,}78$ ist $c=0{,}0305$ und $b=0{,}6224$

bei $0{,}78 < L{:}D < 0{,}88$ ist $c=0{,}0302$ und $b=0{,}6073$

bei $L{:}D \geq 0{,}88$ ist $c=0{,}0301$ und $b=0{,}5914$

Die zweite Ausgestaltung der Erfindung gibt somit an, welcher minimaler Innendurchmesser d der Hülse bei einem bestimmten Außendurchmesser D und einer bestimmten Länge L des zylindrischen Abschnitts der Außenseite der Hülse vorgesehen werden muss. Letztendlich ist die zweite Ausgestaltung ein Spezialfall der ersten Ausgestaltung, da für jedes Verhältnis L:D statt $b_{min}$ und $b_{max}$ ein fester Wert für b angegeben wird, der statt zu einem Intervall, aus dem d erfindungsgemäß auswählbar ist, zu einem festen Wert für d führt.

Es hat sich gezeigt, dass Hülsen, deren Geometrie und damit deren Abmessungen den vorgenannten Vorgaben gemäß erster und/oder zweiter Ausgestaltung der Erfindung entsprechen, bei Belastung kontrolliert verformt werden und damit in vorteilhafter Weise zu einer hohen Genauigkeit des Walzvorgangs beitragen.

Eine Weiterbildung der ersten und der zweiten Ausgestaltung der Erfindung sieht vor, dass sich an der Innenseite der Hülse an einer den minimalen Innendurchmesser d aufweisenden Schmalseite des konischen Abschnitts ein zylindrischer Abschnitt mit entlang der Längsachse gleichbleibendem Querschnitt anschließt.

Das erfindungsgemäße Ölfilmlager für eine Walzwerkwalze ist zur Anordnung in einem Walzgerüst bestimmt oder in einem Walzgerüst angeordnet. Das Ölfilmlager umfasst eine erfindungsgemäße Hülse und eine in einem Lagergehäuse angeordnete Lagerbuchse, in der die Hülse drehbar gelagert ist.

Das erfindungsgemäße Walzgerüst ist bestimmt zur Lagerung von einer oder mehreren Walzwerkwalzen. Das Walzgerüst umfasst ein oder mehrere erfindungsgemäße Ölfilmlager.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Es zeigen

FIG 1    in einer schematischen Querschnittsdarstellung ein Ausführungsbeispiel eines erfindungsgemäßen Ölfilmlagers mit einer erfindungsgemäßen Hülse, und

FIG 2    in einer schematischen Querschnittsdarstellung die erfindungsgemäße Hülse aus FIG 1.

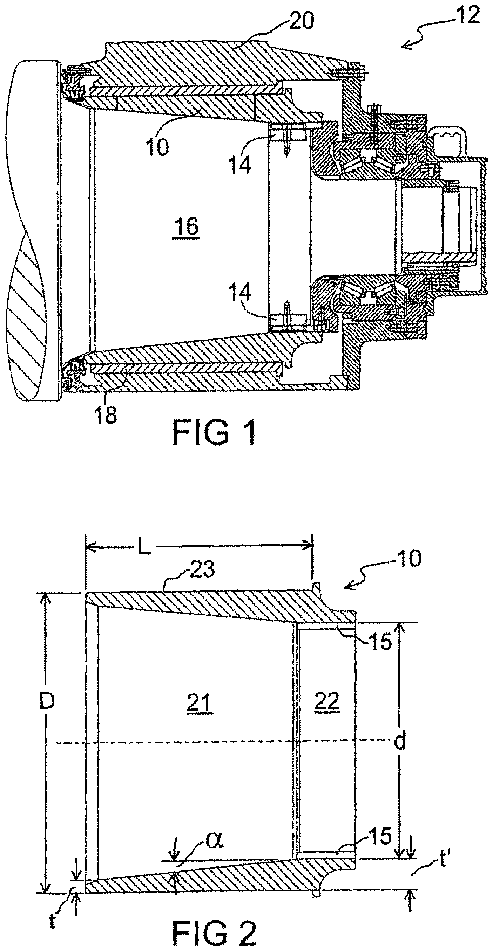

FIG 1 zeigt ein Ausführungsbeispiel eines erfindungsgemäßen Ölfilmlagers 12 und eine Hülse 10 als Teil dieses Ölfilmlagers 12. Das Ölfilmlager 12 umfasst ferner eine Lagerbuchse 18, die in einem Lagergehäuse 20 des Ölfilmlagers 12 angeordnet ist. Die Hülse 10 aus FIG 1 ist nochmals in FIG 2 gezeigt.

Das Ölfilmlager 12 ist in einem Walzgerüst (nicht dargestellt) angeordnet und zur Lagerung einer Walzwerkwalze vorgesehen. Die Hülse 10 des Ölfilmlagers 12 nimmt hierzu einen Walzenzapfen 16 der Walzwerkwalze auf. Die Hülse 10 wiederum ist drehbar in der Lagerbuchse 18 aufgenommen. Während des Betriebs wird die Hülse 10 von einem nicht dargestellten dünnen Ölfilm, der hydrodynamisch in einer Belastungszone zwischen der Hülse 10 und der Lagerbuchse 18 aufrechterhalten wird, getragen.

Eine Außenseite 23 der Hülse 10 ist abschnittsweise zylindrisch ausgebildet. Eine Innenseite der Hülse ist abschnittsweise konisch ausgebildet. Der Durchmesser des konischen Abschnitts 21 verjüngt sich ausgehend von der Eintrittsfläche des Walzenzapfens 16 in Einschubrichtung des Walzenzapfens 16. Die Hülse 10 nimmt den Walzenzapfen 16 abnehmbar auf, wobei ein konischer Abschnitt des Walzenzapfens von dem konischen Abschnitt der Hülse 10 aufgenommen wird. Die Hülse 10 ist über die Verriegelungselemente 14 drehfest an dem Walzenzapfen 16 fixiert.

In FIG 2 ist die Geometrie der Hülse 10 ersichtlich und die für die Erfindung relevanten Abmessungen sind gekennzeichnet.

Der konische Abschnitt 21 der Innenseite der Hülse 10 hat an seiner der Eintrittsfläche gegenüberliegenden Schmalseite einen minimalen Innendurchmesser d. Dargestellt ist ferner der Verjüngungswinkel α des konischen Abschnitts 21. Die Außenseite 23 der Hülse 10 ist zylindrisch ausgebildet mit einem Außendurchmesser D und einer Länge L. Hieraus ergibt sich eine minimale Materialstärke t und eine maximale Materialstärke t' des konischen Abschnitts 21 der Hülse 10.

An der Schmalseite des konischen Abschnitts 21 der Innenseite der Hülse 10 grenzt ein zylindrischer Abschnitt 22 der Innenseite der Hülse 10 an. In diesem zylindrischen Abschnitt 22 sind Keilnuten 15 ausgebildet, die zur Ausbildung einer drehfesten Verbindung mit den Verriegelungselementen 14 des Walzenzapfens 1, beispielsweise Federkeilen, zusammenwirken. Im konischen Abschnitt 21 sind keine derartigen Keilnuten vorgesehen, diese sind ausschließlich im zylindrischen Abschnitt 22 ausgebildet.

Die relativen Größenverhältnisse der drei geometrischen Abmessungen "minimaler Innendurchmesser d" des konischen Abschnitts und "Außendurchmesser D" und "Länge L" des zylindrischen Abschnitts der Außenseite 23 der Hülse 10, die in den Figuren nur schematisch dargestellt sind, ergeben sich aus den erfindungsgemäß angegebenen Formeln. Nachfolgend ist ein Beispiel angegeben:

Außendurchmesser D = 1.088,00 mm
Länge L = 876,50 mm

Somit gilt L:D = 876,50 mm : 1.088,00 mm = 0,8056

Erfindungsgemäß ist somit gemäß der ersten Ausgestaltung der Erfindung vorgesehen:

$c = 0,0302$
$b_{min} = 0,544$
$b_{max} = 0,6706$

Gemäß der Formel

$$D \cdot (c \cdot \ln(D) + b_{min}) \leq d \leq D \cdot (c \cdot \ln(D) + b_{max})$$

gilt somit für eine erfindungsgemäße Hülse für den minimalen Innendurchmesser d:

821,6 mm $\leq$ d $\leq$ 959,4 mm

Gemäß der zweiten Ausgestaltung der Erfindung ist erfindungsgemäß ausgehend von den oben genannten Werten vorgesehen:

$c = 0,0302$
$b = 0,6073$

Gemäß der Formel

$$d = D \cdot (c \cdot \ln(D) + b)$$

gilt somit für eine erfindungsgemäße Hülse für den minimalen Innendurchmesser d:

d = 890,5 mm

Bezugszeichenliste

10   Hülse

12   Ölfilmlager
14   Verriegelungselement
15   Keilnut
16   Walzenzapfen
18   Lagerbuchse
20   Lagergehäuse
21   konischer Abschnitt der Innenseite der Hülse 10
22   zylindrischer Abschnitt der Innenseite der Hülse 10
23   Außenseite der Hülse 10

L   Länge des zylindrischen Abschnitts der Außenseite 23 der Hülse 10
d   minimaler Innendurchmesser des konischen Abschnitts 21
D   Außendurchmesser des zylindrischen Abschnitts der Außenseite 23 der Hülse 10
$\alpha$   Verjüngungswinkel des konischen Abschnitts 21
t   minimale Materialstärke des konischen Abschnitts 21
t'   maximale Materialstärke des konischen Abschnitts 21

**Patentansprüche**

1.   Hülse (10) als Teil eines Ölfilmlagers (12) für eine Walzwerkwalze,

wobei die Hülse (10) zur Aufnahme eines Walzenzapfens (16) der Walzwerkwalze bestimmt ist und zur drehbaren Lagerung in einer Lagerbuchse (18) ausgebildet ist, wobei die Lagerbuchse (18) in einem Lagergehäuse (20) eines Walzgerüsts angeordnet ist,
wobei eine Außenseite (23) der Hülse zumindest abschnittsweise zylindrisch ausgebildet ist mit einem Außendurchmesser D und einer Länge L des zylindrischen Abschnitts,
wobei eine Innenseite der Hülse zumindest abschnittsweise konisch ausgebildet ist mit einem minimalen Innendurchmesser d des konischen Abschnitts (21),
**dadurch gekennzeichnet, dass**
für den minimalen Innendurchmesser d gilt:

$$D \cdot (c \cdot \ln(D) + b_{min}) \leq d \leq D \cdot (c \cdot \ln(D) + b_{max})$$

wobei D der Außendurchmesser in der Einheit Millimeter ist,
wobei c und $b_{min}$ und $b_{max}$ folgendermaßen definiert sind:

bei L:D $\leq$ 0,78 ist c=0,0305, $b_{min}$=0,5578, $b_{max}$=0,687
bei 0,78 < L:D < 0,88 ist c=0,0302, $b_{min}$=0,544, $b_{max}$=0,6706
bei L:D $\leq$ 0,88 ist c=0,0301, $b_{min}$=0,5278, $b_{max}$=0,655

2.   Hülse (10) als Teil eines Ölfilmlagers (12) für eine Walzwerkwalze,

wobei die Hülse (10) zur Aufnahme eines Walzenzapfens (16) der Walzwerkwalze bestimmt ist und zur drehbaren Lagerung in einer Lagerbuchse (18) ausgebildet ist, wobei die Lagerbuchse (18) in einem Lagergehäuse (20) eines Walzgerüsts angeordnet ist,
wobei eine Außenseite (23) der Hülse zumindest abschnittsweise zylindrisch ausgebildet ist mit einem Außendurchmesser D und einer Länge L des zylindrischen Abschnitts,
wobei eine Innenseite der Hülse zumindest abschnittsweise konisch ausgebildet ist mit einem minimalen Innendurchmesser d des konischen Abschnitts (21),
**dadurch gekennzeichnet, dass**
für den minimalen Innendurchmesser d gilt:

$$d = D \cdot (c \cdot \ln(D) + b)$$

wobei D der Außendurchmesser in der Einheit Millimeter ist,
wobei c und b folgendermaßen definiert sind:

6

bei L:D $\leq$ 0,78 ist c=0,0305, b=0,6224
bei 0,78 < L:D < 0,88 ist c=0,0302, b=0,6073
bei L:D $\geq$ 0,88 ist c=0,0301, b=0,5914

3. Hülse (10) nach Anspruch 1 oder 2,
**dadurch gekennzeichnet, dass**
sich an der Innenseite der Hülse (10) an einer den minimalen Innendurchmesser d aufweisenden Schmalseite des konischen Abschnitts (21) ein zylindrischer Abschnitt (22) mit entlang der Längsachse gleichbleibendem Querschnitt anschließt.

4. Ölfilmlager (12) für eine Walzwerkwalze, wobei das Ölfilmlager (12) zur Anordnung in einem Walzgerüst bestimmt ist oder in einem Walzgerüst angeordnet ist,
wobei das Ölfilmlager (12) eine Hülse (10) nach einem der Ansprüche 1 bis 3 und eine in einem Lagergehäuse (20) angeordnete Lagerbuchse (18), in der die Hülse (10) drehbar gelagert ist, umfasst.

5. Walzgerüst zur Lagerung von einer oder mehreren Walzwerkwalzen, wobei das Walzgerüst ein oder mehrere Ölfilmlager (12) nach Anspruch 4 umfasst.

FIG 1

FIG 2

**Europäisches Patentamt**
**European Patent Office**
**Office européen des brevets**

## EUROPÄISCHER RECHERCHENBERICHT

Nummer der Anmeldung

EP 24 19 2888

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 136 766 A (SAVITZ VICTOR L [US]) 11. August 1992 (1992-08-11) * Seite 1, Spalte 2, Zeile 12 - Zeile 19; Abbildungen 1,10 * * Seite 1, Spalte 1, Zeile 6 - Zeile 14 * ----- | 1-5 | INV. F16C13/02 F16C17/02 F16C35/02 B21B31/07 |
| X | US 2012/020594 A1 (DRIGANI FAUSTO [IT] ET AL) 26. Januar 2012 (2012-01-26) * Absatz [0095]; Abbildungen 1,2 * ----- | 1-5 | |
| X | US 2002/103062 A1 (WOJTKOWSKI THOMAS C [US] ET AL) 1. August 2002 (2002-08-01) * Abbildungen 1,2 * ----- | 1-5 | |
| X | US 9 284 978 B2 (CORTS ENGINEERING GMBH & CO KG [DE]) 15. März 2016 (2016-03-15) * Abbildung 6 * ----- | 1-5 | |
| | | | RECHERCHIERTE SACHGEBIETE (IPC) F16C |

Der vorliegende Recherchenbericht wurde für alle Patentansprüche erstellt

| Recherchenort | Abschlußdatum der Recherche | Prüfer |
|---|---|---|
| Den Haag | 28. Januar 2025 | Kovács, Endre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 24 19 2888

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-01-2025

| Im Recherchenbericht angeführtes Patentdokument | Datum der Veröffentlichung | Mitglied(er) der Patentfamilie | Datum der Veröffentlichung |
|---|---|---|---|
| US 5136766 A | 11-08-1992 | KEINE | |
| US 2012020594 A1 | 26-01-2012 | CN 102449329 A | 09-05-2012 |
| | | EP 2411687 A1 | 01-02-2012 |
| | | US 2012020594 A1 | 26-01-2012 |
| | | WO 2010109310 A1 | 30-09-2010 |
| US 2002103062 A1 | 01-08-2002 | AT E322946 T1 | 15-04-2006 |
| | | BR 0105919 A | 06-08-2002 |
| | | CA 2363815 A1 | 08-06-2002 |
| | | CN 1357418 A | 10-07-2002 |
| | | DE 60118695 T2 | 29-03-2007 |
| | | EP 1213061 A2 | 12-06-2002 |
| | | ES 2257386 T3 | 01-08-2006 |
| | | JP 3609371 B2 | 12-01-2005 |
| | | JP 2002192207 A | 10-07-2002 |
| | | KR 20020046182 A | 20-06-2002 |
| | | MX PA01012669 A | 20-08-2003 |
| | | RU 2227853 C2 | 27-04-2004 |
| | | TW I221430 B | 01-10-2004 |
| | | US 2002103062 A1 | 01-08-2002 |
| US 9284978 B2 | 15-03-2016 | BR 112014008201 A2 | 13-06-2017 |
| | | CN 104114885 A | 22-10-2014 |
| | | EP 2764263 A2 | 13-08-2014 |
| | | RU 2014117956 A | 10-11-2015 |
| | | UA 113635 C2 | 27-02-2017 |
| | | US 2014248007 A1 | 04-09-2014 |
| | | US 2016195133 A1 | 07-07-2016 |
| | | WO 2013050876 A2 | 11-04-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 4093321 A
- US 4384748 A
- US 4286830 A
- US 4351576 A
- US 6468194 B2